# EUROPÄISCHE PATENTSCHRIFT

(11) **EP 3 202 667 B1**
(45) Veröffentlichungstag und Bekanntmachung des Hinweises auf die Patenterteilung: **09.10.2019**
(21) Anmeldenummer: 17151312.0
(22) Anmeldetag: 13.01.2017
(51) Int. Cl.: B64F 1/305, E04H 15/52

(54) **ZUGANGSTUNNELSYSTEM ZUR ÜBERDACHTEN FÜHRUNG VON PERSONEN**
ACCESS TUNNEL SYSTEM FOR COVERED GUIDANCE OF PERSONS
SYSTÈME DE TUNNEL D'ACCÈS DESTINÉ AU PASSAGE COUVERT DE PERSONNES

(30) Priorität: 05.02.2016 DE 102016001293
(43) Veröffentlichungstag der Anmeldung: 09.08.2017
(73) Patentinhaber: Hübner GmbH & Co. KG, 34123 Kassel (DE)
(72) Erfinder: Gutkuhn, Detlef, 34314 Espenau (DE); Scharf, Lothar, 37242 Bad Sooden-Allendorf (DE); Hübner, Reinhard, 34130 Kassel (DE)
(74) Vertreter: Patentanwälte Walther Hinz Bayer PartGmbB

(56) Entgegenhaltungen:
- EP-A1- 3 202 668
- WO-A1-2017/004542
- US-A- 5 040 257
- US-A1- 2006 254 160
- US-A1- 2015 191 258
- US-B1- 6 487 743

## Beschreibung

Die Erfindung betrifft ein Zugangstunnelsystem mit wenigstens einem Zugangstunnel zur überdachten Führung von Personen zu einem Fahrzeug, einem Flugzeug, einem Gebäude oder dergleichen.

### STAND DER TECHNIK

US 6,487,743 beschreibt ein Zugangstunnelsystem mit den Merkmalen des Oberbegriffs des Anspruchs 1. Aus der nachveröffentlichten EP 3 109 169 A ist ein Zugangstunnel zu einem Flugzeug offenbart, und ein Zugangstunnel ist aus mehreren Tunnelelementen aufgebaut, die miteinander verschiebbar in Verbindung stehen. Derartige Zugangstunnelsysteme finden beispielsweise auf Flughäfen Anwendung, und dienen dazu, Personen beispielsweise von einem Gebäude in einen Bus, von einem Bus in ein Flugzeug oder beispielsweise von einem Gebäude unmittelbar in ein Flugzeug zu führen. Vornehmlich sollen solche Zugangstunnelsysteme dabei eine Überdachung für Personen bilden, zudem werden die Personen durch das Zugangstunnelsystem geleitet und daran gehindert, eine Route beispielsweise zu einem Flugzeug unerwünscht zu verlassen.

Auf einem Boden aufstehende Zugangstunnelsysteme sind als schlauchartige oder kanalartige Führungen bekannt, die beispielsweise über Rollen auf dem Boden verfahrbar sind. Soll beispielsweise ein Fahrzeug wie ein Bus mit einem Zugangstunnelsystem verbunden werden, so kann es vorkommen, dass ein letzter Abschnitt bis zur Einstiegstür des Busses unüberdacht bleibt, insbesondere wenn eine Ausgangsöffnung des Zugangstunnelsystems mit einem Abstand vor dem Bus endet. Weist der Bus mehrere Einstiegstüren auf, so muss das Zugangstunnelsystem derart vor dem Bus enden, dass Personen nach Verlassen des Zugangstunnels wahlweise eine der Einstiegstüren benutzen können. Gleiches gilt für ein oder mehrere Einstiegstüren bei Flugzeuge oder bei Gebäuden.

### OFFENBARUNG DER ERFINDUNG

Aufgabe der Erfindung ist die Weiterbildung eines Zugangstunnelsystems mit wenigstens einen Zugangstunnel zur überdachten Führung von Personen, wobei das Zugangstunnelsystem ein möglich vollständig überdachtes Begehen eines Fahrzeuges, eines Flugzeuges oder eines Gebäudes ermöglichen soll. Insbesondere soll das Zugangstunnelsystem dabei flexibel aufgebaut werden, sodass das Zugangstunnelsystem insbesondere zum vollständig Überdachen erreichen mehrerer Einstiegstüren eines Fahrzeuges, eines Flugzeuges oder eines Gebäudes ermöglichen soll, wobei von Ort zu Ort voneinander abweichende Abstände der Einstiegstüren flexibel erreicht werden sollen.

Diese Aufgabe wird ausgehend von einem Zugangstunnelsystem gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass ein Knotenelement vorgesehen ist, an das der Zugangstunnel mündet und an das sich wenigstens ein weiterer Zugangstunnel anschließt.

Kerngedanke der Erfindung ist die Möglichkeit, eine Abzweigung im Zugangstunnelsystem zu schaffen, und das Knotenelement ist so ausgebildet, dass wenigstens zwei Zugangstunnel an das Knotenelement anbindbar sind, wobei zumindest ein Zugangstunnel an das Knotenelement mündet und der wenigstens eine weitere Zugangstunnel schließt sich an das Knotenelement an. Somit bildet das Knotenelement in gewisser Weise einen Knotenpunkt zwischen zwei Zugangstunneln, und das Knotenelement schafft die Möglichkeit, wenigstens weiteren Zugangstunnel an dieses anzuschließen.

Mittels der erfindungsgemäßen Weiterbildung des Zugangstunnelsystems umfassend wenigstens ein Knotenelement wird ein modularer Aufbau des Zugangstunnelsystems möglich, und es kann ausgehend von zumindest einem an das Knotenelement herangeführten Zugangstunnel eine Abzweigung geschaffen werden an wenigstens einen und vorzugsweise an zwei weitere Zugangstunnel.

Mit besonderem Vorteil ist das Zugangstunnelsystem so ausgebildet, dass sich an das Knotenelement ein erster Zugangstunnel und wenigstens ein zweiter Zugangstunnel anschließt. Dient das Zugangstunnelsystem beispielsweise als System zur Busabfertigung, beispielsweise einem Bus auf dem Vorfeld eines Flughafens, so kann die Anzahl der sich an das Knotenelement anschließenden Zugangstunnel bestimmt werden mit der Anzahl der Einstiegstüren des Busses. Jeder Einstiegstür ist dabei ein Zugangstunnel zugeordnet, und erreicht eine Person über den Zugangstunnel, der beispielsweise von einem Gebäude oder einem Flugzeug an das Knotenelement herangeführt ist, jenes Knotenelement, so kann sich die Person entscheiden, ob der weitere Weg durch den ersten sich anschließenden Zugangstunnel oder durch den zweiten sich anschließenden Zugangstunnel führt, abhängig davon, welche Einstiegstür die Person zum Betreten des Busses wählt. Denkbar ist dabei zum Beispiel auch ein Abfertigungssystem zwischen zwei Bussen, und ein erster sich anschließender Zugangstunnel kann zu einem ersten Bus führen, und ein zweiter sich anschließender Zugangstunnel kann zu einem zweiten Bus führen. Die Anzahl der an das Knotenelement geführten Zugangstunnel kann dabei auch beliebig gewählt sein, beispielsweise wenn aus zwei Einstiegstüren eines Busses oder wenn aus zwei Bussen Personen zusammengeführt werden sollen, um schließlich gemeinsam einen einzigen Zugangstunnel zu nutzen, der sich an das Knotenelement anschließt.

Gemäß Erfindung sind die Zugangstunnel aus Tunnelelementen gebildet, die ineinanderschiebbar sind. Die Tunnelelemente sind in Richtung ihrer Längsachse eines jeden Tunnelelementes konisch zulaufend ausgebildet, sodass die Tunnelelemente nach Art mehrerer Einkaufswagen ineinander schiebbar sind. Mit besonderem Vorteil sind sämtliche Tunnelelemente zur Bildung der Zugangstunnel zueinander gleich ausgebildet, und das Zugangstunnelsystem erhält durch die teleskopartige Ineinanderfügung der mehreren Tunnelelemente eine besondere Flexibilität, um beispielsweise durch das bedarfsgerecht ineinander schiebbare System aus mehreren Tunnelelementen den Abstand von zum Beispiel zwei Einstiegstüren eines Busses einzustellen. Auch die Länge des an das Knotenelement herangeführten Zugangstunnels kann bedarfsgerecht eingestellt werden, indem die Anzahl der Tunnelelemente entsprechend vorausgewählt wird und indem die ausgewählte Anzahl der Tunnelelemente entsprechend der zu bildenden Tunnellänge des Zugangstunnels teilweise ineinander geschoben werden. Folglich wird das Zugangstunnelsystem insbesondere durch die entsprechende Ausgestaltung der Zugangstunnel mittels ineinander schiebbaren Tunnelelementen sehr flexibel ausgebildet, um mit wenigen Handgriffen die Einrichtung zur Busabfertigung zwischen einem Bus und einem Flugzeug, jedoch auch zwischen einem Flugzeug und einem Gebäude oder zwischen einem Gebäude und einem Bus variabel einzurichten.

Gemäß einer vorteilhaften Weiterbildung des Zugangstunnelsystems ist das Knotenelement so ausgebildet, dass der an das Knotenelement mündende Zugangstunnel und zwei sich an das Knotenelement anschließende Zugangstunnel eine T-Form bilden. Denkbar ist dabei auch eine V-Form und denkbar ist auch eine Variante des Zugangstunnelsystems mit mehr als einem Zugangstunnel, der an der Knotenelement herangeführt wird, und es können mehrere Zugangstunnel vorgesehen sein, die sich an das Knotenelement anschließen.

Nach einer weiteren vorteilhaften Ausgestaltung des Zugangstunnelsystems kann wenigstens ein Faltenbalg vorgesehen sein, der sich an den Zugangstunnel anschließt, welcher sich wiederum an das Knotenelement anschließt. Insbesondere dann, wenn die sich an das Knotenelement anschließenden Zugangstunnel an Einstiegstüren eines Busses herangeführt werden sollen, können die Faltenbalge so ausgeschwenkt werden, dass diese in einer horizontalen Schnittebene einen Quadranten bilden. Ist das Zugangstunnelsystem T-förmig ausgeführt, so können die sich an das Knotenelement anschließenden Zugangstunnel etwa parallel vor dem Fahrzeug, also beispielsweise dem Bus, verlaufen, und am Ende der Zugangstunnel schließen sich die Faltenbalge an, um schließlich bis in die Einstiegstür hinein eine überdachte Führung der Personen an das Fahrzeug heran zu gestatten. Die horizontale Ausschwenkbarkeit des Faltenbalges schafft dabei eine weitere Flexibilität des Zugangstunnelsystems, sodass beispielsweise das Zugangstunnelsystem auch an zwei Busse herangeführt werden kann, welche unter einem Winkel zueinander stehen. Auch ist es denkbar, bei einem Gelenkbus, der mit einem Winkel zwischen dem Busvorderteil und dem Bushinterteil geparkt ist, das Zugangstunnelsystem so flexibel an die Einstiegstüren heranzuführen, dass ein beliebiger Winkel von beispielsweise zwei Einstiegstüren mit dem Zugangstunnelsystem flexibel angeschlossen werden können.

Beispielsweise schließt sich eine Eingangsöffnung des ausgeschwenkten Faltenbalges an einer Öffnung des Zugangstunnels an, wobei der Faltenbalg insbesondere mit einem letzten Tunnelelement verbunden sein kann. Weiterhin weist der Faltenbalg eine Ausgangsöffnung auf, mit der der Faltenbalg vor der Einstiegstür des Busses angeordnet wird. Weist der ausgeschwenkte Faltenbalg einen Schwenkwinkel von beispielsweise 90° auf, so können die sich an das Knotenelement anschließenden Zugangstunnel parallel vor dem Fahrzeug, dem Flugzeug oder dem Gebäude verlaufend angeordnet werden, insbesondere wenn das Zugangstunnelsystem eine T-Form aufweisen soll.

Vorteilhafterweise ist das Knotenelement mit einem rechteckigen Grundquerschnitt mit wenigstens zwei zueinander rechtwinklig stehenden Öffnungen ausgebildet. Dabei weist das Knotenelement mit Vorteil vier zueinander rechtwinklig stehende Öffnungen auf, wobei eine vierte Öffnung mit einer weiteren Einstiegstür des Busses in Überdeckung bringbar ist. Nach dieser Variante ergibt sich eine weitere Flexibilitätserhöhung des Zugangstunnelsystems, und an das Knotenelement müssen sich nicht zwingend nur weitere Zugangstunnel anschließen, da auch die Möglichkeit besteht, dass sich an das Knotenelement unmittelbar eine Einstiegstür beispielsweise eines Busses anschließt. So kann der an das Knotenelement herangeführte Zugangstunnel eine erste Tunnelrichtung bilden, und die sich an das Knotenelement anschließenden Zugangstunnel können zum herangeführten Zugangstunnel einen Winkel von 90° aufweisen, sodass die beiden sich an das Knotenelement anschließenden Zugangstunnel zueinander einen Winkel von 180° einschließen und die T-Form bilden. Die Einstiegstür, die sich an die weitere Öffnung des Knotenelementes anschließt, kann beispielsweise in der Richtung liegen, in der der erste Zugangstunnel an das Knotenelement herangeführt ist. Ist das Knotenelement dabei mit einem rechteckigen Grundquerschnitt, insbesondere mit einem quadratischen Grundquerschnitt, ausgebildet, so weist jede der vier Seiten des Grundquerschnittes einen entsprechenden Anschluss auf. Gemäß einer Variante ist auch die Möglichkeit gegeben, dass das Knotenelement einen dreieckigen Grundquerschnitt aufweist.

Beispielsweise ist das Knotenelement mit einem Rahmen und einem Dachelement ausgebildet. Das Dachelement weist dabei mit besonderem Vorteil einen Vordachabschnitt auf, insbesondere dann, wenn sich an eine Seite des Grundelementes die Einstiegstür des Busses anschließt. Der Vordachabschnitt des Dachelementes ragt dabei über die Einstiegstür hinweg, sodass eine Person bis in den Bus hinein überdacht geführt wird. Mit weiterem Vorteil weisen die Faltenbalge ein Vordachelement auf, das sich wenigstens teilweise über der Einstiegstür des Busses erstreckt. Die Vordachelemente der Faltenbalge sind dabei an der Seite des Faltenbalges angeordnet, die an die Einstiegstür des Busses heranschwenkbar ist.

Schließlich wird ein weiterer Vorteil erreicht, wenn das Knotenelement Rollen aufweist, auf denen das Knotenelement aufsteht und mittels denen das Knotenelement verfahrbar ist. Auf ebenso vorteilhafte Weise weisen die Tunnelelemente Rollen auf, und werden die Tunnelelemente ineinander geschoben, um die Länge der jeweiligen Zugangstunnel zu minimieren, so kann beispielsweise mit einem Schleppfahrzeug auf dem Vorfeld eines Flughafens das gesamte Zugangstunnelsystem mit den Tunnelelementen und den Knotenelementen von Ort zu Ort bewegt werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht eines Zugangstunnelsystems in Anordnung vor einem Bus, wobei ein erster Zugangstunnel zusammengeschoben ist und
- Figur 2: das Zugangstunnelsystem in Anordnung vor einem Bus, wobei sämtliche Zugangstunnel ausgefahren sind und wobei Faltenbalge zwischen jeweils einem letzten Tunnelelement und den Einstiegstüren vorgesehen sind.

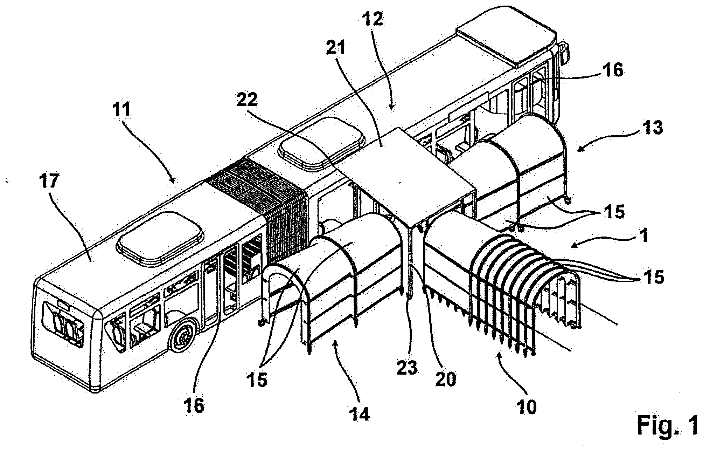

Figur 1 zeigt in einer perspektivischen Ansicht ein Zugangstunnelsystem 1 in beispielhafter Anordnung vor einem Fahrzeug 11, das einen Bus 17 bildet, wie diese auf einem Flughafen eingesetzt werden. Das Zugangstunnelsystem 1 weist einen Zugangstunnel 10 auf, der an ein Knotenelement 12 des Zugangstunnelsystems 1 herangeführt ist. Der Zugangstunnel 10 ist aus mehreren Tunnelelementen 15 ausgebildet, die beispielhaft ineinander geschoben gezeigt sind. Die Tunnelelemente 15 sind so an das Knotenelement 12 herangeführt, dass eine Person ohne Unterbrechung einer Überdachung vom Zugangstunnel 10 in das Knotenelement 12 gelangen kann.

An das Knotenelement 12 schließen sich ein erster Zugangstunnel 13 und ein zweiter Zugangstunnel 14 an, welche ebenfalls aus insbesondere zueinander gleich ausgebildeten Tunnelelementen 15 gebildet sind, wie diese auch den Zugangstunnel 10 bilden. Die Zugangstunnel 13 und 14 sind dabei beispielsweise an Einstiegstüren 16 des Busses 17 herangeführt.

Das Knotenelement 12 ist so ausgeführt, dass die Zugangstunnel 13 und 14 unter einem rechten Winkel zum Zugangstunnel 10 an das Knotenelement 12 herangeführt sind, sodass eine Person das Knotenelement 12 über den Zugangstunnel 10 ohne Unterbrechung einer Überdachung betreten kann und eine Person kann ebenfalls ohne Unterbrechung einer Überdachung vom Knotenelement 12 wahlweise in den ersten sich anschließenden Zugangstunnel 13 oder in den zweiten sich anschließenden Zugangstunnel 14 gelangen.

Das Knotenelement 12 ist mit einem Rahmen 20 und einem Dachelement 21 ausgebildet, wobei der Rahmen 20 fußseitig Rollen 23 aufweist, auf denen das Knotenelement 12 aufsteht und über einen Boden verfahrbar ist. Das Dachelement 21 weist einen Vordachabschnitt 22 auf, der bis oder teilweise über das Fahrzeug 11 geführt ist.

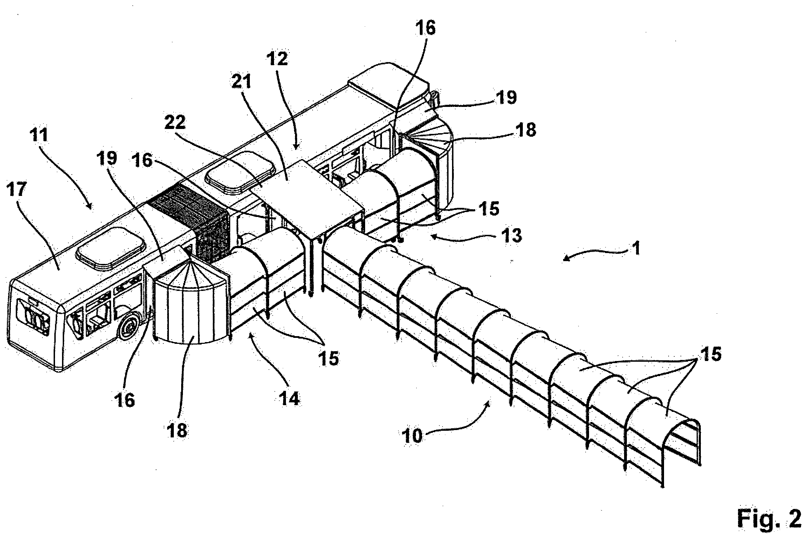

Figur 2 zeigt in einer weitergeführten Ausführungsform das Zugangstunnelsystem 1 mit dem Zugangstunnel 10, dem Kontenelement 12 und den sich anschließenden Zugangstunneln 13 und 14. Das Zugangstunnelsystem 1 ist vor dem Fahrzeug 11 als Beispiel in Form eines Busses 17 angeordnet gezeigt. Sämtliche Zugangstunnel 10, 13 und 14 weisen zueinander gleich ausgebildete Knotenelemente 12 auf, und der Zugangstunnel 10 ist in Abwandlung zur Ansicht in Figur 1 in einem ausgefahrenen Zustand gezeigt. An die Ausgangsseiten der Zugangstunnel 13 und 14 schließen sich Faltenbalge 18 an, die in einem ausgeschwenkten Zustand gezeigt sind, wobei der Schwenkwinkel etwa 90° entspricht. Die Faltenbalge 18 sind dabei vor die Einstiegstüren 16 des Busses 17 geschwenkt worden, und die Faltenbalge 18 weisen Vordachelemente 19 auf, die so über die Einstiegstüren 16 beziehungsweise über den Bus 17 geführt sind, dass eine Person mittels des Faltenbalges 18 ohne Unterbrechung einer Überdachung vom Zugangstunnel 13, 14 in den Bus 17 gelangen kann.

Die Ansicht zeigt eine weitere Einstiegstür 16 des Busses 17, mit der das Knotenelement 12 in Überdeckung gebracht ist, und die weitere Einstiegstür 16 befindet sich unter dem Vordachabschnitt 22 des Dachelementes 21 des Knotenelementes 12. Somit kann eine Person auch vom Knotenelement 12 unmittelbar den Bus 17 betreten.

Das Ausführungsbeispiel des Zugangstunnelsystems 1 ist anhand einer Busabfertigung gezeigt, und das Fahrzeug 11 bildet beispielsweise einen Bus 17, wie dieser auf dem Vorfeld eines Flughafens zum Einsatz kommt. Das Zugangstunnelsystem 1 kann mit den gleichen erfindungsgemäßen Merkmalen auch als Zugangssystem beispielsweise für ein Flugzeug dienen, sodass sich an die Zugangstunnel 13 und 14 Treppen zum Besteigen eines Flugzeugs anschließen können, und es ist auch denkbar, dass das Zugangstunnelsystem 1 an ein Gebäude herangeführt ist, sodass die Zugangstunnel 13 und 14 beispielsweise bis an die Eingangstüren eines Gebäudes münden.

### Bezugszeichenliste:

- 1: Zugangstunnelsystem

- 10: Zugangstunnel
- 11: Fahrzeug
- 12: Knotenelement
- 13: Zugangstunnel
- 14: Zugangstunnel
- 15: Tunnelelement
- 16: Einstiegstür
- 17: Bus
- 18: Faltenbalg
- 19: Vordachelement
- 20: Rahmen
- 21: Dachelement
- 22: Vordachabschnitt
- 23: Rolle

## Patentansprüche

1. Zugangstunnelsystem (1) mit wenigstens einem Zugangstunnel (10,13,14) zur überdachten Führung von Personen zu einem Fahrzeug (11), einem Flugzeug, einem Gebäude, wobei ein Knotenelement (12) vorgesehen ist, an das der Zugangstunnel (10) mündet und an das sich wenigstens ein weiterer Zugangstunnel (13) anschließt, wobei die Zugangstunnel (10, 13, 14) aus Tunnelelementen (15) gebildet sind,
**dadurch gekennzeichnet,**
**dass** die Tunnelelemente (15) in Richtung der Längsachse eines jeden Tunnelelementes konisch zulaufend ausgebildet sind, wobei die Tunnelelemente (15) ineinander schiebbar sind, wobei die Tunnelelemente (15) Rollen (23) aufweisen.

2. Zugangstunnelsystem (1) nach Anspruch 1,
**dadurch gekennzeichnet,**
**dass** sich an das Knotenelement (12) noch ein weiterer
Zugangstunnel (14) anschließt.

3. Zugangstunnelsystem (1) nach einem der Ansprüche 1 oder 2,
**dadurch gekennzeichnet,**
**dass** das Knotenelement (12) so ausgebildet ist, dass der an das Knotenelement (12) mündende Zugangstunnel (10) und zwei sich an das Knotenelement (12) anschließende Zugangstunnel (13, 14) eine T-Form bilden.

4. Zugangstunnelsystem (1) nach einem der vorgenannten Ansprüche,
**dadurch gekennzeichnet,**
**dass** die zwei sich an das Knotenelement (12) anschließenden Zugangstunnel (13, 14) zur Führung von Personen an Einstiegstüren (16) eines Busses (17) ausgebildet sind.

5. Zugangstunnelsystem (1) nach einem der vorgenannten Ansprüche,
**dadurch gekennzeichnet,**
**dass** sich an die Zugangstunnel (13, 14) jeweils ein Faltenbalg (18) anschließt.

6. Zugangstunnelsystem (1) nach Anspruch 5,
**dadurch gekennzeichnet,**
**dass** der Faltenbalg (18) horizontal ausschwenkbar ausgebildet ist.

7. Zugangstunnelsystem (1) nach Anspruch 6,
**dadurch gekennzeichnet,**
**dass** sich eine Eingangsöffnung des ausgeschwenkten Faltenbalges (18) an einer Öffnung des Zugangstunnels (13, 14) anschließt und dass eine Ausgangsöffnung des ausgeschwenkten Faltenbalges (18) vor der Einstiegstür (16) des Busses (17) anordbar ist.

8. Zugangstunnelsystem (1) nach einem der Ansprüche 6 oder 7,
**dadurch gekennzeichnet,**
**dass** der ausgeschwenkte Faltenbalg (18) einen Schwenkwinkel von 90° aufweist, sodass die sich an das Knotenelement (12) anschließenden Zugangstunnel (13, 14) parallel vor dem Fahrzeug (11), dem Flugzeug oder dem Gebäude verlaufend anordbar sind.

9. Zugangstunnelsystem (1) nach einem der Ansprüche 5 bis 8,
**dadurch gekennzeichnet,**
**dass** der Faltenbalg (18) ein Vordachelement (19) aufweist, das sich wenigstens teilweise über der Einstiegstür (16) des Busses (17) erstreckt.

10. Zugangstunnelsystem (1) nach einem der vorgenannten Ansprüche,
**dadurch gekennzeichnet,**
**dass** das Knotenelement (12) einen rechteckigen Grundquerschnitt mit wenigstens zwei zueinander rechtwinklig stehenden Öffnungen aufweist.

11. Zugangstunnelsystem (1) nach Anspruch 10,
**dadurch gekennzeichnet,**
**dass** das Knotenelement (12) vier zueinander rechtwinklig stehende Öffnungen aufweist, wobei eine vierte Öffnung mit einer weiteren Einstiegstür (16) des Busses (17) in Überdeckung bringbar ist.

12. Zugangstunnelsystem (1) nach einem der vorgenannten Ansprüche,
**dadurch gekennzeichnet,**
**dass** das Knotenelement (12) einen Rahmen (20) und ein Dachelement (21) aufweist.

13. Zugangstunnelsystem (1) nach Anspruch 12,
**dadurch gekennzeichnet,**
**dass** das Dachelement (21) einen Vordachabschnitt (22) aufweist.

14. Zugangstunnelsystem (1) nach einem der vorgenannten Ansprüche,
**dadurch gekennzeichnet,**
**dass** das Knotenelement (12) Rollen (23) aufweist, auf denen das Knotenelement (12) aufsteht und mit denen das Knotenelement (12) verfahrbar ist.

## Claims

1. An access tunnel system (1) with at least one access tunnel (10, 13, 14) for sheltered guidance of persons to a vehicle (11), an aircraft, a building, wherein a junction element (12) is provided, into which the access tunnel (10) leads and to which at least one other access tunnel (13) is connected, wherein the access tunnels (10, 13, 14) are formed by tunnel elements (15),
**characterized in that**
the tunnel elements (15) are designed in such a manner that they are conically tapered in the direction of the longitudinal axis of each tunnel element, wherein the tunnel elements (15) can be slid into each other, wherein the tunnel elements (15) comprise rollers (23).

2. The access tunnel system (1) according to claim 1,
**characterized in that**
yet another access tunnel (14) is attached to the junction element (12).

3. The access tunnel system (1) according to one of the claims 1 or 2,
**characterized in that**
the junction element (12) is designed in such a manner that the access tunnel (10) leading into the junction element (12) and two access tunnels (13, 14) attached to the junction element (12) form a T.

4. The access tunnel system (1) according to one of the aforementioned claims,
**characterized in that**
two access tunnels (13, 14) attached to the junction element (12) are designed for guiding persons toward access doors (16) of a bus (17).

5. The access tunnel system (1) according to one of the aforementioned claims,
**characterized in that**
a respective folding bellows (18) is attached to the access tunnels (13, 14).

6. The access tunnel system (1) according to claim 5,
**characterized in that**
the folding bellows (18) is designed so that it can be swung out horizontally.

7. The access tunnel system (1) according to claim 6,
**characterized in that**
an entrance opening of the swung-out folding bellows (18) is attached to an opening of the access tunnel (13, 14) and that an exit opening of the swung-out folding bellows (18) can be disposed in front of the access door (16) of the bus (17).

8. The access tunnel system (1) according to one of the claims 6 or 7,
**characterized in that**
the swung-out folding bellows (18) has a swing angle of 90°, so that the access tunnels (13, 14) attached to the junction element (12) can be disposed so that they run in parallel in front of the vehicle (11), the aircraft or the building.

9. The access tunnel system (1) according to one of the claims 5 to 8,
**characterized in that**
the folding bellows (18) comprises a canopy element (19), which extends at least partially above the access door (16) of the bus (17).

10. The access tunnel system (1) according to one of the aforementioned claims,
**characterized in that**
the junction element (12) comprises a rectangular ground cross-section with at least two openings that are at a right angle relative to each other.

11. The access tunnel system (1) according to claim 10,
**characterized in that**
the junction element (12) comprises four openings that are at a right-angle relative to each other, wherein a fourth opening can be made to overlap another access door (16) of the bus (17).

12. The access tunnel system (1) according to one of the aforementioned claims,
**characterized in that**
the junction element (12) comprises a frame (20) and a roof element (21).

13. The access tunnel system (1) according to claim 12,
**characterized in that**
the roof element (21) comprises a canopy section (22).

14. The access tunnel system (1) according to one of the aforementioned claims,
**characterized in that**
the junction element (12) comprises rollers (23) on which the junction element (12) stands and with which the junction element (12) is displaceable.

## Revendications

1. Système de tunnel d'accès (1) avec au moins un tunnel d'accès (10, 13, 14) pour guider des personnes à couvert vers un véhicule (11), un avion, un bâtiment, où un élément de jonction (12) est prévu dans lequel débouche le tunnel d'accès (10) et auquel se rattache au moins un autre tunnel d'accès (13), où les tunnels d'accès (10, 13, 14) sont formés par des éléments de tunnel (15),
**caractérisé en ce que**
les éléments de tunnel (15) sont formés de manière conique dans la direction de l'axe longitudinal de chaque élément de tunnel, où les éléments de tunnel (15) peuvent être glissés les uns dans les autres, où les éléments de tunnel (15) comportent des roulettes (23).

2. Système de tunnel d'accès (1) selon la revendication 1,
**caractérisé en ce qu'**
encore un autre tunnel d'accès (14) est rattaché à l'élément de jonction (12).

3. Système de tunnel d'accès (1) selon l'une des revendications 1 ou 2,
**caractérisé en ce que**
l'élément de jonction (12) est formé de telle manière que le tunnel d'accès (10) débouchant dans l'élément de jonction (12) et deux tunnels d'accès (13, 14) rattachés à l'élément de jonction (12) forment un T.

4. Système de tunnel d'accès (1) selon l'une des revendications précédentes,
**caractérisé en ce que**
deux tunnels d'accès (13, 14) rattachés à l'élément de jonction (12) sont formés pour guider des personnes vers des portes d'accès (16) d'un bus (17).

5. Système de tunnel d'accès (1) selon l'une des revendications précédentes,
**caractérisé en ce qu'**
un soufflet à plis (18) respectif est rattaché aux tunnels d'accès (13, 14).

6. Système de tunnel d'accès (1) selon la revendication 5,
**caractérisé en ce que**
le soufflet à plis (18) est formé de manière à pouvoir pivoter horizontalement vers l'extérieur.

7. Système de tunnel d'accès (1) selon la revendication 6,
**caractérisé en ce qu'**
une ouverture d'entrée du soufflet à plis (18) ayant pivoté vers l'extérieur se rattache à une ouverture du tunnel d'accès (13, 14) et qu'une ouverture de sortie du soufflet à plis (18) ayant pivoté vers l'extérieur peut être disposée devant la porte d'accès (16) du bus (17).

8. Système de tunnel d'accès (1) selon l'une des revendications 6 ou 7,
**caractérisé en ce que**
le soufflet à plis (18) ayant pivoté vers l'extérieur présente un angle de pivotement de 90°, de sorte que les tunnels d'accès (13, 14) se rattachant à l'élément de jonction (12) peuvent être disposés de manière à s'étendre en parallèle devant le véhicule (11), l'avion ou le bâtiment.

9. Système de tunnel d'accès (1) selon l'une des revendications 5 à 8,
**caractérisé en ce que**
le soufflet à plis (18) comporte un élément formant un auvent (19) qui s'étend au moins partiellement au-dessus de la porte d'accès (16) du bus (17).

10. Système de tunnel d'accès (1) selon l'une des revendications précédentes,
**caractérisé en ce que**
l'élément de jonction (12) comporte une section transversale de base rectangulaire avec au moins deux ouvertures agencées à angle droit l'une par rapport à l'autre.

11. Système de tunnel d'accès (1) selon la revendication 10,
**caractérisé en ce que**
l'élément de jonction (12) comporte quatre ouvertures agencées à angle droit les unes par rapport aux autres, où une quatrième ouverture peut se superposer à une autre porte d'accès (16) du bus (17).

12. Système de tunnel d'accès (1) selon l'une des revendications précédentes,
**caractérisé en ce que**
l'élément de jonction (12) comporte un cadre (20) et un élément formant un toit (21).

13. Système de tunnel d'accès (1) selon la revendication 12,
**caractérisé en ce que**
l'élément formant un toit (21) comporte une section formant un auvent (22).

14. Système de tunnel d'accès (1) selon l'une des revendications précédentes,
**caractérisé en ce que**
l'élément de jonction (12) comporte des roulettes (23) sur lesquelles repose l'élément de jonction (12) et avec lesquelles l'élément de jonction (12) est déplaçable.
